(19) **Europäisches Patentamt European Patent Office Office européen des brevets**

(11) **EP 3 389 817 B1**

(12) **EUROPEAN PATENT SPECIFICATION**

(45) Date of publication and mention
of the grant of the patent:
**21.06.2023 Bulletin 2023/25**

(51) International Patent Classification (IPC):
**B01D 35/00** (2006.01)   **B01D 39/00** (2006.01)
**G01F 1/00** (2022.01)

(21) Application number: **16826511.4**

(22) Date of filing: **14.12.2016**

(52) Cooperative Patent Classification (CPC):
**B01D 39/00;** B01D 2239/1216

(86) International application number:
**PCT/US2016/066508**

(87) International publication number:
**WO 2017/106255 (22.06.2017 Gazette 2017/25)**

(54) **LIQUID HYDROCARBON FILTERABILITY SYSTEM**

SYSTEM FÜR FLÜSSIGKOHLENWASSERSTOFFFILTRIERBARKEIT

SYSTÈME DE FILTRABILITÉ DE FLUIDE HYDROCARBURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 US 201562267681 P**

(43) Date of publication of application:
**24.10.2018 Bulletin 2018/43**

(73) Proprietor: **Donaldson Company, Inc.
Bloomington, MN 55431 (US)**

(72) Inventors:
• **GOERTZ, Matthew
  Minneapolis, MN 55440-1299 (US)**
• **MORAVEC, Davis, B.
  Minneapolis, MN 55440-1299 (US)**
• **DALLAS, Andrew, J.
  Minneapolis, MN 55440-1299 (US)**
• **GROSSBAUER, Scott, A.
  Minneapolis, MN 55440-1299 (US)**
• **HAUSER, Bradly, G.
  Minneapolis, MN 55440-1299 (US)**
• **DOYLE, James, N.
  Minneapolis, MN 55440-1299 (US)**
• **TUMA, Daniel, L.
  Minneapolis, MN 55440-1299 (US)**
• **MATSUMOTO, Matthew, T.
  Minneapolis, MN 55440-1299 (US)**
• **ROBERTSON, Kelly, C.
  Minneapolis, MN 55440-1299 (US)**

(74) Representative: **Eisenführ Speiser
Patentanwälte Rechtsanwälte PartGmbB
Johannes-Brahms-Platz 1
20355 Hamburg (DE)**

(56) References cited:
**WO-A1-2011/071756     WO-A2-2007/076163**

• **Astm International: "Designation: D2068 - 14 Standard Test Method for Determining Filter Blocking Tendency", , 1 July 2014 (2014-07-01), pages 1-9, XP55784770, United States Retrieved from the Internet: URL:https://webstore.ansi.org/standards/as tm/astmd206814 [retrieved on 2021-03-11]**
• **Iso Standards: "ISO 13357-2:2005 Petroleum products-Determination of the filterability of lubricating oils- Part 2: Procedure for dry oils", ISO Standard, 1 January 2005 (2005-01-01), 22 April 2021 (2021-04-22), pages 1-10, XP055798182, CH Retrieved from the Internet: URL:https://www.iso.org/obp/ui/#iso:std:is o:13357:-2:ed-2:v1:en**

**Description**

The disclosure herein relates to liquid hydrocarbon filterability systems and methods. In particular the disclosure relates to a robust, high resolution, on-demand or portable systems and methods of determining liquid hydrocarbon filterability.

One standard test method for determining fuel contaminate level is to pass a volume of fuel through a pre-weighed filter, dry the filter and determine the mass of the particulate trapped by the filter. The change in mass defines the amount of particulate in the fuel sample.

Another standard test method for determining fuel filterability or filter blocking tendency is to pass a temperature controlled, constant flow of fuel sample through a filter element and measure the pressure increase on the upstream side of the filter element. Known liquid hydrocarbon filterability systems and methods are for example disclosed in ISO Standards: "ISO 13357-2:2005 Petroleum products-Determination of the filterability of lubricating oils- Part 2: Procedure for dry oils", ISO Standard, 1 January 2005 (2005-01-01), pages 1-10, CH and ASTM International: "Designation: D2068 - 14 Standard Test Method for Determining Filter Blocking Tendency", 1 July 2014 (2014-07-01), pages 1-9, United States.

The standard fuel filterability test methods dictate specific sensitive testing equipment maintaining specific testing temperatures and other conditions. The standard fuel filterability test methods tend to be low resolution tests.

SUMMARY

The claimed invention is defined in independent claims 1 and 9 and relates to a liquid hydrocarbon filterability system as defined in independent claim 1 and relates to a method of determining liquid hydrocarbon filterability as defined in independent claim 9. Preferred configurations of the claimed system are defined in dependent claims 2-8. Preferred configurations of the claimed method are defined in dependent claims 10-15. Insofar as any of the examples described herein are not encompassed by the scope of the claims, they are considered to be as supplementary background information and do not constitute a definition of the claimed invention per se. The present disclosure relates to liquid hydrocarbon filterability systems and methods. In particular the disclosure relates to robust, high resolution, on-demand or portable systems and methods of determining liquid hydrocarbon filterability.

In one aspect, a liquid hydrocarbon or fuel filterability system includes a liquid hydrocarbon (or fuel) sample source piping in fluid communication with a liquid hydrocarbon (or fuel) sample container. A filtration media element includes filtration media. The filtration media element is in fluid communication with the liquid hydrocarbon (or fuel) sample source piping. Filtered liquid hydrocarbon (or fuel) outlet piping is in fluid communication with and downstream of the filtration media element. A flow or volume measurement element is in fluid communication with the filtered liquid hydrocarbon (or fuel) outlet piping and is configured to measure an amount of liquid hydrocarbon (or fuel) passing through the filtration media element. A constant pressure source is configured to provide liquid hydrocarbon (or fuel) to the filtration media element at a constant pressure.

In another aspect, a method includes applying a constant pressure to a fuel sample to form a pressurized fuel sample and then flowing the pressurized fuel sample through filtration media at the constant pressure to form a filtered sample amount. The filtered sample is then measured to determine fuel filterability.

In a further aspect, a kit includes a fuel sample container having a volume of about 0.5 liter or greater or 0.75 liter or greater or 1 liter or greater and a constant pressure source inlet coupled to the fuel sample container. The constant pressure source inlet is configured to apply a constant pressure that is greater than atmospheric pressure. Fuel outlet piping is coupled to the fuel sample container. The kit includes a plurality of filtration media elements. Each filtration media element is configured to be coupled to and released from an end of the fuel outlet piping within the fuel sample container. Each filtration media element may be configured to retain filtration media having a filtration surface area of about 1.5 cm$^2$ or less. A fuel outlet container is in fluid connection with the fuel outlet piping and configured to measure an amount of fuel passing through the filtration media element.

The above summary is not intended to describe each embodiment or every implementation of the present disclosure. A more complete understanding will become apparent and appreciated by referring to the following detailed description and claims taken in conjunction with the accompanying drawings. In other words, these and various other features and advantages will be apparent from a reading of the following detailed description.

BRIEF DESCRIPTION OF THE DRAWINGS

The disclosure may be more completely understood in consideration of the following detailed description of various embodiments of the disclosure in connection with the accompanying drawings.

**FIG. 1A** is a schematic flow diagram of an exemplary system for determining hydrocarbon fluid filterability.

**FIG. 1B** is a schematic flow diagram of another exemplary system for determining hydrocarbon fluid filterability.

**FIG. 2** is a schematic diagram of another exemplary system for determining hydrocarbon fluid filterability.

**FIG. 3** is a graph of volume versus time for three levels of fuel contaminate.

**FIG. 4** is a graph of time versus volume for three levels of fuel contaminate.

DETAILED DESCRIPTION

The present disclosure relates to liquid hydrocarbon fluid filterability systems and methods. In particular the disclosure relates to a robust, high resolution, on-demand or portable system and method of determining liquid hydrocarbon fluid, preferably fuel, filterability. This system and method utilizes a constant pressure of sample liquid applied to the filtration media. The flowrate decay may be utilized to easily determine the contamination level in the sample liquid.

The hydrocarbon fluid filterability system and method may be a portable system that provides reliable and high resolution test results that may indicate hydrocarbon contaminate level and may also provide a life expectancy of a correlated liquid hydrocarbon or fuel filter. A constant pressure source provides the liquid hydrocarbon (or fuel) sample to the filtration media at a constant pressure, preferably in a range from 207 kPa (30 psig) to 415 kPa (60 psig) or from 241 kPa (35 psig) to 415 kPa (60 psig) or from 275 kPa (40 psig) to 415 kPa (60 psig). The constant pressure source may provide the liquid hydrocarbon (or fuel) sample to the filtration media at a constant pressure that is greater than 415 kPa (60 psig), or in a range from 275 kPa (40 psig) to 550 kPa (80 psig). The liquid hydrocarbon (or fuel) sample passes through the filtration media and forms a filtered sample amount. This filtered sample amount may be measured as a function of time to determine the contaminate level or fuel filterability of the liquid hydrocarbon (or fuel) sample. The decay in flow rate (mass or volume) may identify contaminate level and may also be used to estimate the lifetime of an associated filter that is filtering a liquid hydrocarbon material (or fuel) where the sample was sourced from. The testing filtration media has a filtration area that is small enough to provide contaminate level sensitivity (or resolution) that has not been previously described. The testing filtration media may have a filtration area of 1.5 cm$^2$ or less and a maximum pore size of 10 micrometers or less. The hydrocarbon filterability system and method also utilizes a large volume of hydrocarbon sample. The hydrocarbon filterability system and method may utilize 0.5 liter or greater, or 0.75 liter or greater, or 1 liter or greater, of hydrocarbon sample. Thus the hydrocarbon filterability system and method may filter at least 0.5 linear meters, or at least 0.75 meters, or at least 1 linear meter of liquid hydrocarbon or fuel. The filtration media may be contained within a filtration media element that may be replaced easily with a clean filtration media element. The filtration media elements may be tailored to remove different sizes of particulate matter or different contaminants found within hydrocarbon. Filtration media elements may be tailored to mimic specific full sized filter elements (on tank or on vehicle) to simulate a filtration process. While the present disclosure is not so limited, an appreciation of various aspects of the disclosure will be gained through a discussion of the embodiments provided below.

In the preceding description, reference is made to the accompanying set of drawings that form a part hereof and in which are shown by way of illustration several specific embodiments. It is to be understood that other embodiments are contemplated and may be made without departing from (e.g., still falling within) the scope of the present disclosure. The preceding detailed description, therefore, is not to be taken in a limiting sense. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that may vary depending upon the desired properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

It is noted that terms such as "top", "bottom", "above, "below", etc. may be used in this disclosure. These terms should not be construed as limiting the position or orientation of a structure, but should be used as providing spatial relationship between the structures.

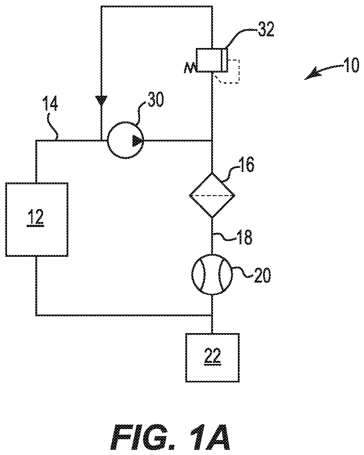

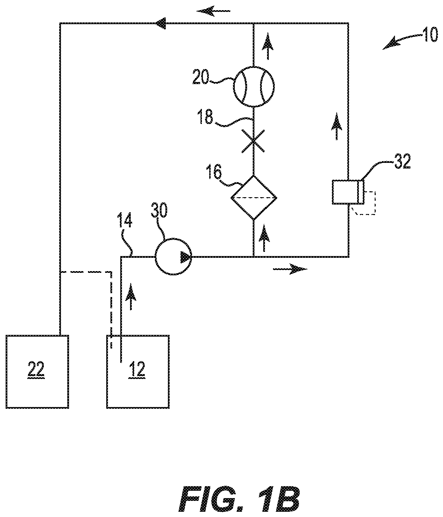

**FIG. 1A** and **1B** are schematic flow diagrams of exemplary systems **10** for determining liquid hydrocarbon (or fuel) filterability. The liquid hydrocarbon (or fuel) filterability system **10** includes a liquid hydrocarbon (or fuel) sample source piping **14** in fluid communication with a liquid hydrocarbon (or fuel) sample container **12**. A filtration media element **16** includes filtration media. The filtration media element **16** is in fluid communication with the liquid hydrocarbon (or fuel) sample source piping **14**. Filtered liquid hydrocarbon (or fuel) outlet piping **18** is in fluid communication with and downstream of the filtration media element **16**. A flow or volume measurement element **20** is in fluid communication with the filtered liquid hydrocarbon (or fuel) outlet piping **18** and is configured to measure an amount of liquid hydrocarbon (or fuel) passing through the filtration media element **16**. A constant pressure source **30** is configured to provide liquid hydrocarbon (or fuel) to the filtration media element **16** at a constant pressure.

The constant pressure source **30** may be any element that applies a pressure to the sample liquid hydrocarbon (or fuel) flowing to the filtration media element **16**. The constant pressure source **30** may be a fluid pump, such as a positive displacement pump, for example. The constant pressure source **30** may be a compressed gas, such as an inert gas, for example.

The constant pressure source **30** may be a positive displacement pump that may change flow rates in response to a pressure sensor downstream of the positive displacement pump. The constant pressure source **30** may be a positive displacement pump operating at a constant flow rate and coupled to a pressure valve **32** that relieves pressure to maintain a constant pressure contacting the filtration media element **16**. The pressure valve **32** may be in fluid connection and between the constant pressure source **30** and the filtration media element **16**. The pressure valve **32** may relieve pressure back upstream of the positive displacement pump **30** or downstream from the flow or volume measurement element **20** to another container downstream such as the filtered sample container **22** or to piping downstream from the flow or volume measurement element **20**, for example.

The flow measurement element **20** is configured to measure and provide a flow rate measurement value. The volume measurement element **20** is configured to measure and provide a volume measurement value.

The constant pressure source **30** forms a pressurized liquid hydrocarbon or fuel sample that is then passed though the filtration media **16** at the constant pressure, upstream of the filtration media **16**, to form a filtered sample. The filtered sample is then measured (mass or volume) as a function of time to determine the contaminate level or filterability of the liquid hydrocarbon sample.

The filtered sample amount may then be removed from the system or returned to the hydrocarbon sample container **12**. The hydrocarbon sample container **12** may be a hydrocarbon storage container or transport container. A filtered sample container **22** may collect the filtered sample and then be removed from the system.

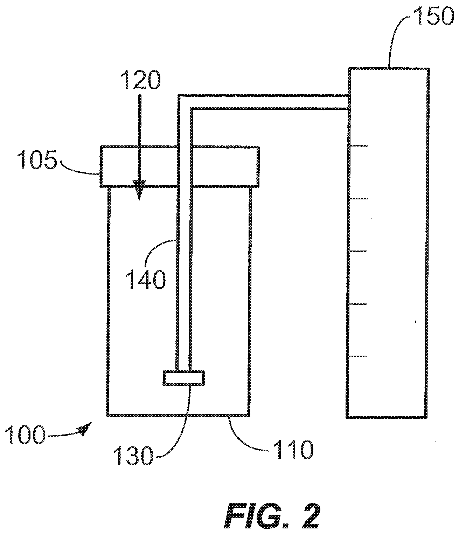

**FIG. 2** is a schematic diagram of one exemplary system **100** for determining liquid hydrocarbon or fuel filterability. A liquid hydrocarbon (or fuel) filterability system **100** includes a liquid hydrocarbon (or fuel) sample container **110** and a constant pressure source **120** coupled to the liquid hydrocarbon (or fuel) sample container **110**. Filtered liquid hydrocarbon (or fuel) outlet piping **140** is coupled to the liquid hydrocarbon (or fuel) sample container **110** and a filtration media element **130** is disposed within the hydrocarbon sample container **110** and in fluid connection with the filtered liquid hydrocarbon (or fuel) outlet piping **140**. The filtration media element **130** is configured to retain filtration media. A liquid hydrocarbon (or fuel) outlet container **150** is in fluid connection with the filtered liquid hydrocarbon (or fuel) outlet piping **140** and configured to measure an amount of liquid hydrocarbon (or fuel) passing through the filtration media element **130**. The liquid hydrocarbon (or fuel) outlet container **150** may be replaced with a flow or volume measurement element described above.

The constant pressure source is configured to apply a constant pressure to the liquid hydrocarbon (or fuel) sample within the container. The liquid hydrocarbon (or fuel) sample container may include a lid element **105** that will withstand the pressure applied by the constant pressure source **120**. In some of these embodiments the constant pressure source **120** is a sealed compressed gas container such as a cartridge, bottle or cylinder. The constant pressure source **120** may be pressurized liquid hydrocarbon (or fuel) sample provided as described above.

The liquid hydrocarbon (or fuel) sample container **110** has a substantial sample volume that may be tunable to a specific application or simulation. The liquid hydrocarbon (or fuel) sample container **110** may have a volume of about 0.5 liter or greater or about 0.75 liter or greater or about one liter or greater. The liquid hydrocarbon (or fuel) sample may be less than 10 liters, for example. This substantial volume may assist in simulating large scale filtration unit operations. The substantial volume also reduces the risk of trace external contaminates from causing variability in the sample testing.

The filtration media element **130** may be submerged within the liquid hydrocarbon (or fuel) sample volume. Having the filtration media **130** element submerged or immersed within the liquid hydrocarbon (or fuel) sample volume for a time period before liquid hydrocarbon (or fuel) is collected at the liquid hydrocarbon (or fuel) outlet container **150** may provide a number of advantages. For example, the filtration media element **130** and filtration media temperature may equilibrate with the temperature of the liquid hydrocarbon (or fuel) sample volume and the filtration media element **130** and filtration media will have the head pressure of the liquid hydrocarbon (or fuel) sample volume already applied prior to application of the constant pressure source. Having the filtration element and filtration media within the sample volume may also reduce or eliminate contamination of the piping and process elements downstream of the filtration media.

The filtration media element **130** is in fluid connection with the filtered liquid hydrocarbon (or fuel) outlet piping **140**. The filtration media element **130** may be fixed to an upstream-most end of the filtered liquid hydrocarbon (or fuel) outlet piping **140**. Thus, contaminates are filtered or captured by the filtration media retained within the filtration media element **130** and do not end up in the filtered liquid hydrocarbon (or fuel) outlet piping **140** or elements downstream of the filtration media. Thus the volume or flow measurement element does not become fouled or need to be cleaned. This provides an advantage of not having to clean the filtered liquid hydrocarbon (or fuel) outlet piping **140** or reduced time or effort to clean the filtered liquid hydrocarbon (or fuel) outlet piping **140** or the volume or flow measurement element between sample tests. Having the filtration media as the most upstream component of the filtered liquid hydrocarbon (or fuel) outlet piping ensures that the filtration media is the first outlet element that the test sample contacts.

The filtration media may be contained or retained within the filtration media element **130**. The filtration media element **130** may be a rigid housing that holds or retains a layer of filtration media. The filtration media element **130** may be a polymeric element or a metallic element. The filtration media element **130** may be configured to retain an outer portion or periphery of the filtration media and allow sample filtration fluid to pass through a central portion of the filtration media.

The filtration media element **130** may be replaced easily with a clean filtration media element on the fuel outlet piping **140**. The filtration media element **130** may have a male or female threaded portion to screw onto the fuel outlet piping **140**. The filtration media element **130** may have a detent or snap-fit portion to snap onto the fuel outlet piping **140**. The filtration media element **130** may be configured to replace the filtration media retained within the filtration media element **130**.

The filtration media may be the same media used in vehicle fuel filters. In one case the media is available under the commercial designation Synteq XP® and may be described in Patent US7314497 B2. The media is held in a molded cartridge that may allow for easier handling than a traditional filter media disks. The filtration media element may be open on top to allow ease of viewing of the collected contaminate. This may also provide for a visual confirmation of the contamination levels.

The filtration media element may have any useful dimensions. In many examples not necessarily covered by the claims, the filtration media element may have a diameter of 3 cm or less, or 2 cm or less, or in a range from 1 to 3 cm, or from 1 to 2 cm. In many embodiments, the filtration media element may have a height of or 3 cm or less, or 2 cm or less, or in a range from 1 to 3 cm or from 1 to 2 cm.

The filtration media has a reduced filtration area as compared to other test methods. According to the invention the filtration media has a filtration surface area of about 1.5 cm$^2$ or less, or about 1 cm$^2$ or less or in a range from 0.2 to 1.5 cm$^2$ or in a range from 0.2 to 1 cm$^2$. Reducing the filtration surface area may increase the sensitivity or resolution of the filtration test measurement since the sample volumes are relatively large, as described herein.

The filtration media may be any useful filtration material for hydrocarbon material. The filtration media may have a maximum pore size of about 10 micrometers or less, or 5 micrometers or less, or 3 micrometer or less, or in a range from 0.4 to 10 micrometers or from 0.4 to 5 micrometers. A maximum pore size rating may describes the largest pore accessible to flow through a filter media as tested by the method described in ASTM F 316.

The filtration media elements may be tailored to contain or retain filtration media that removes different sizes of particulate matter or different contaminants found within hydrocarbon material. Filtration media retained within the filtration media elements may be tailored to mimic specific full sized filter elements to simulate a filtration process. The filtration media retained within the filtration media elements may be the same kind or type of filtration media. Using the same kind or type of may allow a user to simulate and predict the actual lifetime of the on-vehicle or full size filter filtering the fuel that was sampled.

The systems and methods described herein provides for the linear amount of liquid hydrocarbon or fuel passing through the filtration surface area that is greater than other liquid hydrocarbon or fuel testing methods. For example, the systems and methods described herein provide for at least 0.5, at least 0.75, or at least 1 linear meter of liquid hydrocarbon or fuel to pass through the filtration element. Prior fuel filterability tests utilize less than 0.2 linear meters of fuel. Increasing the linear amount of fuel tested improves the resolution of the fuel filterability test.

For comparison, commercial or "on-vehicle" fuel filters may be designed to filter a determined linear amount of hydrocarbon sample through the filtration surface area and may be dependent on the level of contaminate in the hydrocarbon sample. For relatively dirty fuel, the linear amount of fuel passing through the commercial filter filtration surface area may only be 4 meters or less or 3 meters or less, or in a range from 0.5 to 4 meters. A typical on-engine fuel filter is designed to filter about 20 to 40 linear meters of fuel (clean fuel), for example.

A fuel outlet container or the flow or volume measurement element is configured to measure the amount of liquid hydrocarbon (or fuel) passing through the filtration media. The fuel outlet container may measure the actual volume or weight of the liquid hydrocarbon (or fuel) passing through the filtration media. The flow or volume measurement elements may be on-line volume or flow meters that measure the volume or flow rate of the liquid hydrocarbon (or fuel) passing through the filtration media. Two or more, or continuous measurements may be taken to determine the hydrocarbon or fuel filterability.

The fuel outlet container may include two or more defined volumes and may be contained within a single container or vessel or the two or more defined volumes may be contained in separate and distinct containers or vessels.

In this instance, outlet flow can enter the first measuring container volume for a specified time interval and then be diverted to a second measuring container volume for a specified time interval. In many embodiments, the time interval value is the same. Here the amount (volume, mass or flow rate) can be compared to determine the decay in flow rate (over two or more time intervals) and thus, the filterability of the hydrocarbon sample.

The fuel outlet container may include two or more defined volumes and may be contained within a single container or vessel or the two or more defined volumes may be contained in separate and distinct containers or vessels. In this instance, outlet flow can enter the first measuring container volume until the first volume is reached and then be diverted to a second measuring container volume until the second volume is reached. In some embodiments, the defined volumes are the same. Here the time to fill each volume can be compared to determine the decay in flow rate (over the two or more volume intervals) and thus, the filterability of the hydrocarbon sample.

The flow measurement element, or flow meter can continuously output the flow rate passing through the filtration element. A curve of flow rate as a function of time or volume may be formed to illustrate the flow rate decay.

The liquid hydrocarbon to be filtered may be any filterable liquid hydrocarbon material. The liquid hydrocarbon may be oil. Preferably the liquid hydrocarbon is a fuel, such as diesel fuel for example. The liquid hydrocarbon or fuel may have a viscosity of 10 cP or less or from 1 to 10 cP, or from 1 to 5 cP. This low viscosity liquid hydrocarbon or fuel is provided to the reduced area filtration element at a constant pressure in a range from about 207 kPa (30 psig) to 415 kPa (60 psig), or from 241 kPa (35 psig) to 415 kPa (60 psig), or from 275 kPa (40 psig) to 415 kPa (60 psig), or greater. High resolution results may be obtained by filtering at least 0.5 linear meters of this low viscosity fuel through a reduced surface area filter element at these high constant pressure values.

Determining contaminate levels in fuels such as diesel fuel is often difficult. Current standards require the use of sensitive, expensive and bulky equipment. In addition, the contaminate size that is tested with these ASTM methods are quite large. It has been found that even moving fuel causes contaminate levels to increase. Three currently used methods for determining the cleanliness and filterability of diesel fuels include: ASTM D2068, D6217, and D1796.

The first of these methods, ASTM D2068 "Standard Test Method for Determining Filter Blocking Tendency" involved passing a maximum of 300ml of diesel fuel through a 1.3 cm$^2$ patch at a constant flow rate. Either the pressure measured at 300 ml filter fluid or volume filtered at 105 kPa of differential pressure is used to calculate the filter blocking tendency. The filter blocking tendency number is then related by the fuel user to estimate a prediction of filter life. In this method the linear amount of fluid filtered is less than 0.2 meters.

The second of these methods, ASTM D6217 "Standard Test Method for Particulate Contamination in Middle Distillate Fuels by Laboratory Filtration", involves filtering 1 liter of fuel through a 47millimeter diameter filter membrane with 0.8 micrometer pores. The amount of contaminant is then gravimetrically determined and reported in a range of 0-25 mg/l to the nearest 0.1 mg/l.

The third of method, ASTM D2709 "Standard Test Method for Water and Sediment in Middle Distillate Fuels by Centrifuge" involves centrifuging 100 ml of fuel and visually recording the volume of contaminant to the nearest 0.005ml. If all of the contaminant was a dust of density 2 grams per cubic centimeter, the detection limit of the technique is a contamination level of 10 milligrams per 1 liter.

Modern high pressure fuel systems are sensitive to fine particulate in a range of 2 to 4 micrometers. Filters for these high pressure fuel systems need to remove nearly all of it to protect them. This fine particulate is typically about 85% of the particulate load in number (not mass) in fuel. In fuels with short filter life/filterability issues the concentration of this very fine particulate can be much higher and plug things very quickly leading to unexpected downtime and maintenance. The liquid hydrocarbon (or fuel) filterability systems and methods described herein provide an increased sensitivity (or resolution) to determine filterability of liquid hydrocarbon (or fuel) that contain fine contaminate particles.

The exemplary system for determining fuel filterability may be utilized by applying a constant pressure to a liquid hydrocarbon (or fuel) sample and flowing the pressurized liquid hydrocarbon (or fuel) sample through filtration media and into fuel outlet piping to form a filtered sample amount. Then the method includes measuring the filtered sample amount (as a function of time) and determining fuel filterability based on the measuring step.

The measuring step may include measuring the filtered sample amount at a first time and a second time. The measuring step may include measuring the filtered sample amount continuously for a specified time period or until the sample stops flowing. The measuring step may include measuring a flow rate of the filtered sample as a function of time.

The measuring step may include measuring a decay of a flow rate of the filtered sample amount by measuring three or more filtered sample amounts at specified times. The measuring step may include measuring a decay of a flow rate of the filtered sample amount continuously for a specified time period or until the sample stops flowing. The measuring step may include measuring the time for a first volume and a time for a second volume.

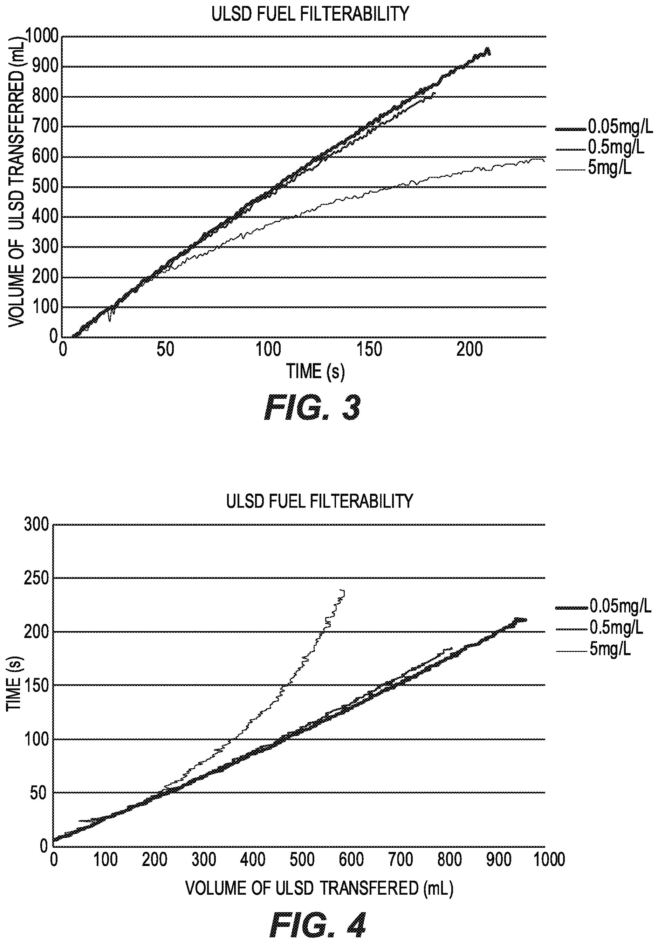

To account for some inherit forms of sample and testing variability (e.g. fluid viscosity, variability in media sample) it may be preferable to measure the time as a function of volume transferred (FIG. 4) as opposed to the volume transferred as a function of time (FIG. 3). The data could be fit to a function that can provide the time required to reach two different volumes:

$$\tau = f(V) \rightarrow (V_1, s_{v1}) \, \& \, (V_2, s_{v2})$$

This can be used to determine a filterability value:

$$f = \left(\frac{s_{v2} - s_{v1}}{s_{v1}}\right) / \left(\frac{V_2 - V_1}{V_1}\right)$$

Where $t_{V1}$ and $t_{V2}$ are the times to reach the first volume ($V_1$) and second volume ($V_2$) respectively. In the experiment the first volume is reached before the second volume. The same $V_1$ and $V_2$ must be used when comparing two separate fluids. In some samples with higher contamination levels the second volume may be determined from extrapolating the data fit to a volume that was not reached during the experiment. One example would be to use a first volume of 250 ml and a second volume of 1000 ml. In this case the data was fit to a second order polynomial to yield A, B and C coefficients. This is showing in Table 1:

Table 1 - F Values of Various Iso-Dust Concentrations using Curve Fit and Volumes

| Fuel Mixture Iso-Medium Dust mg/l | 2nd Order Curve Fit | | | V1 | V2 | |
|---|---|---|---|---|---|---|
| | A | B | C | 250 | 1000 | F value |
| 0.05 | 3.29E-05 | 1.85E-01 | 3.81E+00 | 48 | 218 | 1.170268 |
| 0.5 | 4.12E-05 | 1.88E-01 | 3.30E+00 | 50 | 229 | 1.207766 |
| 5 | 5.45E-04 | 3.25E-02 | 1.22E+01 | 42 | 578 | 4.22963 |

Similarly, the function of time vs volume can be used to calculate a slope at one volume ($V_1$) and a second volume ($V_2$). Then filterability value could be calculated as follows:

$$f = \left(\frac{s_{v2}}{s_{v1}}\right)$$

Where $s_{V1}$ and $s_{V2}$ are the slopes of the function at the first volume ($V_1$) and second volume ($V_2$) respectively.
An example of this is shown in Table 2:

Table 2 - F values of Various Iso-Dust Concentrations Using Curve Fit and Slopes

| Fuel Mixture Iso-Medium Dust mg/l | 2nd Order Curve Fit | | | Slope V1 | Slope V2 | |
|---|---|---|---|---|---|---|
| | A | B | C | 200 | 1000 | F value |
| 0.05 | 3.29E-05 | 1.85E-01 | 3.81E+00 | 0.1982 | 0.2508 | 1.265644 |
| 0.5 | 4.12E-05 | 1.88E-01 | 3.30E+00 | 0.2045 | 0.2704 | 1.322379 |
| 5 | 5.45E-04 | 3.25E-02 | 1.22E+01 | 0.2505 | 1.1225 | 4.481038 |

In both cases a value of 1 (for F value) indicates that the flow rate did not decrease during the test and is an indication of a clean fuel. Values greater than 1 indicate that the fluid had some level of contaminant. Dirtier fluids will cause a larger decrease in flowrate under constant pressure and will return larger filterability values.
The determining step may define or estimate a number of expected service hours for a fuel filter element comprising fuel filtration media filtering fuel that is representative of the fuel sample, and the fuel filtration media corresponds to the filtration media. Utilizing the systems and methods described herein, it has been found that this system may simulate a full size bulk filtration unit operation where the filter element has a filtration surface area of 0.5 m$^2$ or greater, or 0.7 m$^2$ or greater or 1 m$^2$ or greater. This system filtration media may simulate a typical on-vehicle filtration unit operation where the filter element has a filtration surface area in a range from 0.05 to 0.15 m$^2$, or 0.08 to 0.12 m$^2$ or about 0.1 m$^2$.
The determining step may define or determine a contaminate concentration in the fuel sample. This determining step may be independent of a temperature of the fuel sample.

**Examples**

**FIG. 3** is a graph of volume versus time for three levels of fuel contaminate. **FIG. 4** is a graph of time versus volume for three levels of fuel contaminate and an associate polynomial curve fit.

Diesel fuel meeting ASTM D975 was sourced from a local vendor and pre-filtered through a 0.45 μm membrane (Product #60173, Pall Life Sciences) before using. Pre-filtration was performed to eliminate stray sources of unwanted fuel contamination. For each series of tests a set of fuels was prepared with varying amount of contaminant using serial dilutions from the most concentrated sample. This procedure helps to reduce variation within a single set of tests. The contaminant used in these experiments was ISO 12103-1, A3 Medium Test dust from Powder Technology Inc. (Burnsville, MN)

For each test, the sample fluid was loaded into a vessel and the headspace pressurized using a compressed gas source. Once pressured the experiment starts by allowing fluid to access the filter media. The headspace pressure is held constant at 50 PSI for the entirety of the test through a 1 stage pressure regulator. The fluid volumetric flow rate or total volume filtered is measured using a flow meter or level sensor, respectively. If the fluid flow rate is measured, the volume of fluid filtered at any specific time if found through integration of a flow rate versus time function. In the experiments shown in **FIG. 3** the unlabeled solid line curves used a level sensor to measure total volume filtered and "Run 2" dashed line curves used a flow meter to measure volumetric flow rate. **FIG. 4** is a graph of this data but illustrated as time versus volume for the three levels of fuel contaminate and an associate polynomial curve fit for each of the three fuel contaminate levels.

Embodiments of the systems, methods and kits to determine fuel filterability are disclosed. The implementations described above and other implementations are within the scope of the following claims. One skilled in the art will appreciate that the present disclosure may be practiced with embodiments other than those disclosed. The disclosed embodiments are presented for purposes of illustration and not limitation, and the present invention is limited only by the claims that follow.

**Claims**

**1.** A liquid hydrocarbon filterability system (10, 100) comprising:

liquid hydrocarbon sample source piping (14) in fluid communication with a liquid hydrocarbon sample container (12, 110);
a filtration media element (16, 130) comprising filtration media, the filtration media element (16, 130) is in fluid communication with the liquid hydrocarbon sample source piping (14);
filtered liquid hydrocarbon outlet piping (18, 140) in fluid communication with and downstream of the filtration media element (16, 130);
a flow or volume measurement element (20) in fluid communication with the filtered liquid hydrocarbon outlet piping (18, 140), configured to measure an amount of liquid hydrocarbon passing through the filtration media element (16, 130);
a constant pressure source (30, 120) configured to provide liquid hydrocarbon to the filtration media element (16, 130) at a constant pressure;
**characterised in that**
the liquid hydrocarbon sample container (12, 110) has a volume of about 0.5 liter or greater; and
wherein the filtration media has a filtration surface area of about 1.5 cm$^2$ or less.

**2.** The system (10, 100) of claim 1, wherein the liquid hydrocarbon sample container (12, 110) has a volume of about 0.75 liter or greater or about one liter or greater.

**3.** The system (10, 100) according to any one of the preceding claims, wherein the filtration media has a maximum pore size of about 10 micrometers or less, or 5 micrometers or less, or 3 micrometer or less, or in a range from 0.4 to 10 micrometers or from 0.4 to 5 micrometers.

**4.** The system (10, 100) according to any one of the preceding claims, wherein the filtration media has a filtration surface area of about 1 cm$^2$ or less or in a range from 0.2 to 1.5 cm$^2$ or in a range from 0.2 to 1 cm$^2$.

**5.** The system (10, 100) according to any one of the preceding claims, wherein constant pressure source (30, 120) is a positive displacement pump and a pressure relief valve (32) in fluid connection and between the positive displacement pump and the filtration media element (16, 130).

6. The system (10, 100) according to any one of the preceding claims, wherein the flow measurement element (20) is a flow meter to measure the flow rate of liquid hydrocarbon passing through the filtration media element (16, 130).

7. The system (10, 100) according to any one of the preceding claims, wherein the constant pressure source (30, 120) applies and maintains a constant pressure in a range from 207 kPa (30 psig) to 415 kPa (60 psig) or from 241 kPa (35 psig) to 415 kPa (60 psig) or from 275 kPa (40 psig) to 415 kPa (60 psig).

8. The system (10, 100) according to any one of the preceding claims, wherein the liquid hydrocarbon outlet piping is in fluid communication with the liquid hydrocarbon sample container (12, 110) or the liquid hydrocarbon sample source piping (14).

9. A method of determining liquid hydrocarbon filterability, comprising:

applying a constant pressure to a liquid hydrocarbon sample to form a pressurized liquid hydrocarbon sample;
flowing the pressurized liquid hydrocarbon sample through filtration media at the constant pressure to form a filtered sample amount;
measuring the filtered sample amount;
determining liquid hydrocarbon filterability based on the measuring step;
**characterised in that**
the flowing step comprises flowing at least 0.5 linear meters of liquid hydrocarbon through the filtration media; and wherein the filtration media has a filtration surface area of about 1.5 cm$^2$ or less.

10. The method according to claim 9, wherein the measuring step comprises measuring the filtered sample amount at a first time interval and a second time interval.

11. The method according to claim 9 or 10, wherein the measuring step comprises measuring a decay of a flow rate of the filtered sample amount by measuring three or more filtered sample amounts at specified times.

12. The method according to any one of claims 9 to 11, wherein the measuring step comprises measuring a first volume for a first time interval and then measuring a second volume for a second time interval.

13. The method according to any one of claims 9 to 12, wherein the flowing step comprises flowing at least about 1 linear meter of liquid hydrocarbon through the filtration media.

14. The method according to any one of claims 9 to 13, wherein the filtration media has a filtration surface area of about 1 cm$^2$ or less or in a range from 0.2 to 1.5 cm$^2$ or in a range from 0.2 to 1 cm$^2$ and the liquid hydrocarbon sample defines a volume of at least about 0.5 liter or greater or about 0.75 liter or greater or about one liter or greater.

15. The method according to any one of claims 9 to 14, wherein the constant pressure is in a range from 207 kPa (30 psig) to 415 kPa (60 psig) or from 241 kPa (35 psig) to 415 kPa (60 psig) or from 275 kPa (40 psig) to 415 kPa (60 psig).

**Patentansprüche**

1. System zur Filtrierbarkeit von flüssigen Kohlenwasserstoffen (10, 100), das Folgendes umfasst:

Flüssigkohlenwasserstoff-Probenleitung (14), die in Fluidverbindung mit einem Behälter (12, 110) für eine Flüssigkohlenwasserstoffprobe stehen;
ein Filtrationsmedienelement (16, 130), das Filtrationsmedien umfasst, wobei das Filtrationsmedienelement (16, 130) in Fluidverbindung mit der Flüssigkohlenwasserstoff-Probenleitung (14) steht;
eine Auslassleitung (18, 140) für gefilterten flüssigen Kohlenwasserstoff, die in Fluidverbindung mit dem Filtrationsmedienelement (16, 130) steht und diesem nachgeschaltet ist;
ein Durchfluss- oder Volumenmesselement (20), das in Fluidverbindung mit der Auslassleitung (18, 140) für gefilterten flüssigen Kohlenwasserstoff steht und so konfiguriert ist, dass es die Menge an flüssigem Kohlenwasserstoff misst, die durch das Filtrationsmedienelement (16, 130) hindurchgeht;
eine Konstantdruckquelle (30, 120), die so konfiguriert ist, dass sie dem Filtrationsmedienelement (16, 130) flüssigen Kohlenwasserstoff mit einem konstanten Druck zuführt;
**dadurch gekennzeichnet, dass** der Flüssigkohlenwasserstoff-Probenbehälter (12, 110) ein Volumen von etwa 0,5 Liter oder mehr hat; und
wobei das Filtrationsmedium eine Filtrationsoberfläche von etwa 1,5 cm² oder weniger aufweist.

2. System (10, 100) nach Anspruch 1, wobei der Flüssigkohlenwasserstoff-Probenbehälter (12, 110) ein Volumen von etwa 0,75 Liter oder mehr oder etwa einem Liter oder mehr hat.

3. System (10, 100) nach einem der vorhergehenden Ansprüche, wobei das Filtrationsmedium eine maximale Porengröße von etwa 10 Mikrometern oder weniger, oder 5 Mikrometern oder weniger, oder 3 Mikrometern oder weniger, oder in einem Bereich von 0,4 bis 10 Mikrometern oder von 0,4 bis 5 Mikrometern aufweist.

4. System (10, 100) nach einem der vorhergehenden Ansprüche, wobei das Filtrationsmedium eine Filtrationsoberfläche von etwa 1 cm² oder weniger oder im Bereich von 0,2 bis 1,5 cm² oder im Bereich von 0,2 bis 1 cm² aufweist.

5. System (10, 100) nach einem der vorhergehenden Ansprüche, wobei die Konstantdruckquelle (30, 120) eine Verdrängerpumpe und ein Druckbegrenzungsventil (32) ist, das in Fluidverbindung und zwischen der Verdrängerpumpe und dem Filtrationsmedienelement (16, 130) steht.

6. System (10, 100) nach einem der vorhergehenden Ansprüche, wobei das Durchflussmesselement (20) ein Durchflussmesser ist, um die Durchflussrate des flüssigen Kohlenwasserstoffs zu messen, der durch das Filtrationsmedienelement (16, 130) fließt.

7. System (10, 100) nach einem der vorhergehenden Ansprüche, wobei die Konstantdruckquelle (30, 120) einen konstanten Druck in einem Bereich von 207 kPa (30 psig) bis 415 kPa (60 psig) oder von 241 kPa (35 psig) bis 415 kPa (60 psig) oder von 275 kPa (40 psig) bis 415 kPa (60 psig) anlegt und aufrechterhält.

8. System (10, 100) nach einem der vorhergehenden Ansprüche, wobei die Auslassleitung für flüssigen Kohlenwasserstoff in Fluidverbindung mit dem Flüssigkohlenwasserstoff-Probenbehälter (12, 110) oder der Flüssigkohlenwasserstoff-Probenleitung (14) steht.

9. Verfahren zur Bestimmung der Filtrierbarkeit von flüssigen Kohlenwasserstoffen, umfassend:

Anlegen eines konstanten Drucks an eine flüssige Kohlenwasserstoffprobe, um eine unter Druck stehende flüssige Kohlenwasserstoffprobe zu bilden;
Fließenlassen der unter Druck stehenden flüssigen Kohlenwasserstoffprobe durch Filtrationsmedien bei konstantem Druck, um eine gefilterte Probenmenge zu bilden;
Messung der gefilterten Probenmenge;
Bestimmung der Filtrierbarkeit von flüssigen Kohlenwasserstoffen auf der Grundlage des Messschritts;
**dadurch gekennzeichnet, dass** der Durchflussschritt das Durchfließen von mindestens 0,5 linearen Metern flüssigen Kohlenwasserstoffs durch das Filtrationsmedium umfasst; und
wobei das Filtrationsmedium eine Filtrationsoberfläche von etwa 1,5 cm² oder weniger aufweist.

10. Verfahren nach Anspruch 9, wobei der Messschritt das Messen der gefilterten Probenmenge in einem ersten Zeitintervall und in einem zweiten Zeitintervall umfasst.

11. Verfahren nach Anspruch 9 oder 10, wobei der Messschritt das Messen des Abklingens der Durchflussrate der gefilterten Probenmenge durch Messen von drei oder mehr gefilterten Probenmengen zu bestimmten Zeitpunkten umfasst.

12. Verfahren nach einem der Ansprüche 9 bis 11, wobei der Messschritt das Messen eines ersten Volumens für ein erstes Zeitintervall und dann das Messen eines zweiten Volumens für ein zweites Zeitintervall umfasst.

13. Verfahren nach einem der Ansprüche 9 bis 12, wobei der Durchflussschritt das Durchfließen von mindestens etwa 1 lfm flüssigem Kohlenwasserstoff durch das Filtrationsmedium umfasst.

14. Verfahren nach einem der Ansprüche 9 bis 13, wobei das Filtrationsmedium eine Filtrationsoberfläche von etwa 1 cm² oder weniger oder in einem Bereich von 0,2 bis 1,5 cm² oder in einem Bereich von 0,2 bis 1 cm² aufweist und die flüssige Kohlenwasserstoffprobe ein Volumen von mindestens etwa 0,5 Liter oder mehr oder etwa 0,75 Liter oder mehr oder etwa 1 Liter oder mehr definiert.

**15.** Verfahren nach einem der Ansprüche 9 bis 14, wobei der konstante Druck in einem Bereich von 207 kPa (30 psig) bis 415 kPa (60 psig) oder von 241 kPa (35 psig) bis 415 kPa (60 psig) oder von 275 kPa (40 psig) bis 415 kPa (60 psig) liegt.

**Revendications**

**1.** Système de filtrabilité d'hydrocarbure liquide (10, 100) comprenant :

une canalisation de source d'échantillon d'hydrocarbure liquide (14) en communication fluide avec un récipient d'échantillon d'hydrocarbure liquide (12, 110) ;
un élément de milieu de filtration (16, 130) comprenant un milieu de filtration, l'élément de milieu de filtration (16, 130) est en communication fluide avec la canalisation de source d'échantillon d'hydrocarbure liquide (14) ;
une canalisation de sortie d'hydrocarbure liquide filtré (18, 140) en communication fluide avec et en aval de l'élément de milieu de filtration (16, 130) ;
un élément de mesure d'écoulement ou de volume (20) en communication fluide avec la canalisation de sortie d'hydrocarbure liquide filtré (18, 140), configuré pour mesurer une quantité d'hydrocarbure liquide passant à travers l'élément de milieu de filtration (16, 130) ;
une source de pression constante (30, 120) configurée pour fournir un hydrocarbure liquide à l'élément de milieu de filtration (16, 130) à une pression constante ;
**caractérisé en ce que**
le récipient d'échantillon d'hydrocarbure liquide (12, 110) présente un volume d'environ 0,5 litre ou supérieur ; et
dans lequel le milieu de filtration présente une surface spécifique de filtration d'environ 1,5 cm$^2$ ou inférieure.

**2.** Système (10, 100) selon la revendication 1, dans lequel le récipient d'échantillon d'hydrocarbure liquide (12, 110) présente un volume d'environ 0,75 litre ou supérieur ou d'environ un litre ou supérieur.

**3.** Système (10, 100) selon l'une quelconque des revendications précédentes, dans lequel le milieu de filtration présente une taille maximum de pore d'environ 10 micromètres ou inférieure, ou de 5 micromètres ou inférieure, ou de 3 micromètres ou inférieure, ou dans un intervalle de 0,4 à 10 micromètres ou de 0,4 à 5 micromètres.

**4.** Système (10, 100) selon l'une quelconque des revendications précédentes, dans lequel le milieu de filtration présente une surface spécifique de filtration d'environ 1 cm$^2$ ou inférieure ou dans un intervalle de 0,2 à 1,5 cm$^2$ ou dans un intervalle de 0,2 à 1 cm$^2$.

**5.** Système (10, 100) selon l'une quelconque des revendications précédentes, dans lequel une source de pression constante (30, 120) est une pompe à déplacement positif et une vanne de libération de pression (32) en connection fluide et entre la pompe à déplacement positif et l'élément de milieu de filtration (16, 130).

**6.** Système (10, 100) selon l'une quelconque des revendications précédentes, dans lequel l'élément de mesure d'écoulement (20) est un débitmètre pour mesurer le débit d'hydrocarbure liquide passant à travers l'élément de milieu de filtration (16, 130).

**7.** Système (10, 100) selon l'une quelconque des revendications précédentes, dans lequel la source de pression constante (30, 120) applique et maintient une pression constante dans un intervalle de 207 kPa (30 psig) à 415 kPa (60 psig) ou de 241 kPa (35 psig) à 415 kPa (60 psig) ou de 275 kPa (40 psig) à 415 kPa (60 psig).

**8.** Système (10, 100) selon l'une quelconque des revendications précédentes, dans lequel la canalisation de sortie d'hydrocarbure liquide est en communication fluide avec le récipient d'échantillon d'hydrocarbure liquide (12, 110) ou la canalisation de source d'échantillon d'hydrocarbure liquide (14).

**9.** Procédé de détermination de filtrabilité d'hydrocarbure liquide, comprenant :

l'application d'une pression constante à un échantillon d'hydrocarbure liquide pour former un échantillon d'hydrocarbure liquide pressurisé ;
l'écoulement de l'échantillon d'hydrocarbure liquide pressurisé à travers un milieu de filtration à la pression constante pour former une quantité d'échantillon filtré ;
la mesure de la quantité d'échantillon filtré ;

la détermination de filtrabilité d'hydrocarbure liquide sur la base de l'étape de mesure ;
**caractérisé en ce que**
l'étape d'écoulement comprend l'écoulement d'au moins 0,5 mètre linéaire d'hydrocarbure liquide à travers le milieu de filtration ; et
dans lequel le milieu de filtration présente une surface spécifique de filtration d'environ 1,5 cm$^2$ ou inférieure.

10. Procédé selon la revendication 9, dans lequel l'étape de mesure comprend la mesure de la quantité d'échantillon filtré dans un premier intervalle de temps et un second intervalle de temps.

11. Procédé selon la revendication 9 ou 10, dans lequel l'étape de mesure comprend la mesure d'un retard d'un débit de la quantité d'échantillon filtré en mesurant trois quantités d'échantillons filtrés ou plus à des moments spécifiques.

12. Procédé selon l'une quelconque des revendications 9 à 11, dans lequel l'étape de mesure comprend la mesure d'un premier volume pendant un premier intervalle de temps et puis la mesure d'un second volume pendant un second intervalle de temps.

13. Procédé selon l'une quelconque des revendications 9 à 12, dans lequel l'étape d'écoulement comprend l'écoulement d'au moins 1 mètre linéaire d'hydrocarbure liquide à travers le milieu de filtration.

14. Procédé selon l'une quelconque des revendications 9 à 13, dans lequel le milieu de filtration présente une surface spécifique de filtration d'environ 1 cm$^2$ ou inférieure ou dans un intervalle de 0,2 à 1,5 cm$^2$ ou dans un intervalle de 0,2 à 1 cm$^2$ et l'échantillon d'hydrocarbure liquide définit un volume d'au moins environ 0,5 litre ou supérieur ou d'environ 0,75 litre ou supérieur ou d'environ un litre ou supérieur.

15. Procédé selon l'une quelconque des revendications 9 à 14, dans lequel la pression constante se trouve dans un intervalle de 207 kPa (30 psig) à 415 kPa (60 psig) ou de 241 kPa (35 psig) à 415 kPa (60 psig) ou de 275 kPa (40 psig) à 415 kPa (60 psig).

**FIG. 1A**

**FIG. 1B**

**FIG. 2**

ULSD FUEL FILTERABILITY

*FIG. 3*

ULSD FUEL FILTERABILITY

*FIG. 4*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7314497 B2

**Non-patent literature cited in the description**

- ISO 13357-2:2005 Petroleum products-Determination of the filterability of lubricating oils- Part 2: Procedure for dry oils. *ISO Standard,* 01 January 2005, 1-10

- Designation: D2068 - 14 Standard Test Method for Determining Filter Blocking Tendency. *ASTM International,* 01 July 2014, 1-9